# EUROPEAN PATENT APPLICATION

(11) **EP 2 329 938 A1**
(43) Date of publication of application: **08.06.2011**
(21) Application number: 09014909.7
(22) Date of filing: 01.12.2009
(51) Int. Cl.: B29C 70/10, D01D 5/253

(54) **Fibre-reinforced plastic material comprising fibers with at least one groove**

(71) Applicant: SIEMENS AKTIENGESELLSCHAFT, 80333 München (DE)
(72) Inventor: Grove-Nielsen, Erik, 7870 Roslev (DK); Winther-Jensen, Martin, 4690 Haslev (DK)

(57) **Abstract**

The present invention relates to fibre-reinforced plastic material comprising matrix material 3 and fibres 1a which are embedded in the matrix material 3. According to the invention, the surface of the fibres 1a comprises at least one groove 5 to extend the bonding surface of the fibres 1a for an enhanced adhesion of the matrix material 3.

## Description

The present invention relates to composite material in particular to fibre-reinforced plastics and to the manufacturing of fibre-reinforced plastic material.

Fibre-reinforced plastics can be described as multi-constituent materials that comprise reinforcing fibres embedded in a rigid matrix. Most composites used in engineering applications contain fibres made of glass, carbon or aramid. The fibres can also be made of basalt or other natural material.

A diverse range of polymers can be used as the matrix to fibre-reinforced plastic composites and these are generally classified as thermoset resins like epoxy, polyester or thermoplastic resins like polyamide.

Products made of fibre-reinforced plastics are used for light weight constructions. An example of such products is a wind turbine blade.

The specific stiffness and the specific strength of the fibre material are much higher than the specific stiffness and the specific strength of the matrix material. Hence, the highest possible percentage of reinforcement fibres is requested in order to attain the highest possible specific stiffness and the highest possible specific strength of the resulting composite material.

At present, fibre-reinforced plastics with more than 70 percent by volume of fibre material can be produced. However, it has to be taken into account that the fatigue properties of the composite material may change by increasing the fibre content.

In case of glass fibre reinforced plastics, practice has shown that a fibre percentage exceeding approximately 56 percent by volume, which corresponds to 75 percent by weight, results in decreased fatigue properties for the laminate. This holds especially true in case of vacuum consolidated resin injection.

Therefore, technologies are required for manufacturing a fibre-reinforced plastic material with a high specific stiffness and a high specific strength while maintaining or even enhancing the fatigue properties of the material.

It is known in the art to add additional laminates during the manufacturing process of the composite material in order to achieve a better fatigue resistance. Disadvantageously, this increases the weight of the product.

As aforementioned, the fatigue resistance of fibre reinforced composite material can degrade with higher fibre percentages. Lacks of matrix material between the fibres result in movement and fretting of neighbouring fibres not being supported by the matrix material on their entire surface. As a result, local cracks may propagate through the composite material.

Thus, the matrix material has to enclose completly the fibres and adhere to all fibres in order to transfer forces between matrix and fibre material and to distribute forces between the fibres.

However, there are often zones with no adhesion of matrix to fibre in fibre-reinforced plastic material, especially where the fibres are tangent to each other. The transfer of forces is hindered in these areas. This may lead to local stress gradients and a lower fatigue resistance of the composite material.

Therefore, it is the aim of the present invention to improve the fatigue resistance of fibre-reinforced material.

The aim of the invention is achieved by the features of claim 1. Further aspects of the invention are subject of the dependent claims.

The present invention relates to fibre-reinforced plastic material comprising matrix material and fibres which are embedded in the matrix material. According to the invention, the surface of the fibres comprises at least one groove to extend the bonding surface of the fibres for an enhanced adhesion of the matrix material.

Moreover, the contact surfaces of fibre-to-fibre contacts are reduced and the fatigue resistance of the composite material is enhanced.

The invention will be described by way of example in more detail in the following with reference to the drawings, in which

The drawings show preferred configurations and do not limit the scope of the invention.
FIG 1 shows a sectional drawing of a portion of the fibre-reinforced plastic material according to an embodiment of the invention,
FIG 2 shows a sectional drawing of a portion of the fibre-reinforced plastic material according to another embodiment of the invention,
FIG 3 shows a sectional drawing of a portion of the fibre-reinforced plastic material according to yet another embodiment of the invention,
FIG 4 shows a sectional drawing of a portion of the fibre-reinforced plastic material according to further embodiment of the invention and
FIG 5 shows a sectional drawing of a portion of the fibre-reinforced plastic material according to yet further embodiment of the invention.

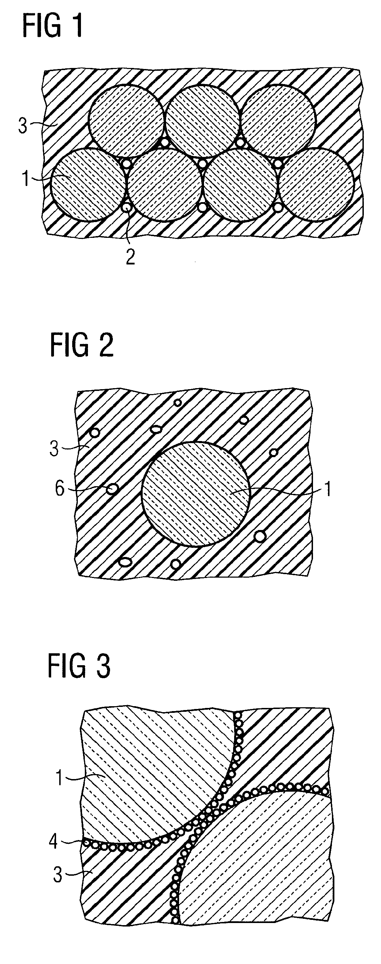

According to an embodiment of the invention, shown in FIG 1, the fibre-reinforced plastic material comprises first fibres 1 according to a first kind of fibres, second fibres 2 according to a second kind of fibres and matrix material 3. The fibres 1,2 are embedded in the matrix material 3.

The first fibres 1 are the principle reinforcement fibres. The second fibres 2 are additional fibres having a smaller diameter than the first fibres 1.

First and second fibres 1,2 are cylindrical elongate fibres, preferably, glass fibres. The matrix material 3 is, preferably, a thermoset resin like epoxy, polyester, polyurethane or even a plant based resin.

As shown in FIG 1, there are small interspaces between the first fibres 1 in areas in which the fibres 1 are tangent to each other.

According to this embodiment of the invention, the interspaces are filled with second fibres 2. A mix of reinforcement fibres having different diameters is introduced.

Preferably, the second fibres 2 have a diameter which equates to approximately an eight to a sixth of the diameter of the first fibres 1. For example, second fibres 2 having a diameter of 3 µm - 4 µm can fill interspaces between first fibres 1 having a diameter of about 24 µm. Moreover, the second fibres 2 can comprise fibres which are different in diameter.

In a further embodiment of the invention, the second fibres are made of another material than the first fibres 1. The second fibres 2 can be made, for instance, of a material having flexural properties which are different from the flexural properties of the first fibres 1.

As shown in FIG 1, the first fibres 1 and the second fibres 2 are arranged in a way as to enable the highest possible packing density while avoiding fibre fretting.

By filling the interspaces between the first fibres 1 with second fibres 2, the tendency to crack propagation is reduced.

Besides, the second fibres 2 serve as fibre spacers to the first fibres 1. Thus, the contact surfaces of fibre-to-fibre contacts are reduced. As a result, the fatigue resistance of the final composite material is increased.

According to another embodiment of the invention, shown in FIG 2, the fibre-reinforced plastic material comprises fibres 1 and matrix material 3. The fibres 1 are embedded in the matrix material 3. In addition, particles 6 are embedded in the matrix material 3.

The fibres 1 are cylindrical elongate fibres, preferably, glass fibres. The matrix material 3 is, preferably, a thermoset resin like epoxy, polyester, polyurethane or even a plant based resin.

The particles 6, which are small particles compared to the fibre diameter, serve as fibre spacers to the fibres 1.

The particles 6 can be of a round, an elongated or other shape. Preferably, the particles have a length or a diameter of up to one tenth of the fibre diameter. The particles 6 can also comprise nano particles having one or more dimensions of the order of 100nm or less.

According to this embodiment of the invention, the particles 6 are able to be stirred and dispersed into the liquified matrix material 3 which is then used for manufacturing the reinforced-plastic material.

The particles 6 fill the interspaces between the fibres 1. Thus, the tendancy to crack propagation of the resulting composite material is reduced.

Moreover, the particles 6 enable flow routes between the fibres 1 and allow for an enhanced resin transfer during the manufacturing process of the fibre-reinforced plastic material. In addition, the contact surfaces of direct fibre-to-fibre contacts are reduced. As a result, the fatigue resistance of the overall composite material is enhanced.

In yet another embodiment of the invention, shown in FIG 3, the fibre-reinforced plastic material comprises fibres 1 and matrix material 3. The fibres 1 are embedded in this matrix material 3 and in addition, they are provided with a protective jacket 4.

The fibres 1 are cylindrical elongate fibres, preferably, glass fibres. The matrix material 3 is, preferably, a thermoset resin like epoxy, polyester, polyurethane or even a plant based resin.

The protective jacket 4 envelops the individual fibres 1 and serves as fibre spacer. The thickness of the jacket 4 is, preferably, in the range of 1 to 10 percent of the fibre diameter.

The jacket 4 is made of a highly porous material in order to be permeable to the matrix material 3. This allows the matrix material 3 to penetrate the jacket 4 and to impregnate the surface of the fibres. Thus, full adhesion of the matrix material 3 to the fibres 1 inside of the jackets 4 is ensured. The interlaminar shear strength of the binding matrix needs to stay unimpaired.

Generally, a fibre manufacturing process, for instance glass fibre manufacturing, comprises extruding of liquid material and afterwards sizing of the filaments with a chemical solution.

During the sizing process a kind of coating or primer is applied to the filaments which protects them and which ensures proper bonding with the matrix material.

The jackets 4 are, preferably, applied to the fibres 1 after this initial sizing process. Thereby, the jackets 4 can be applied, for instance, as a solution or as a dispersion.

Alternatively, the jackets 4 can be co-extruded and adapted during the drawing process of the fibres 1. The jacket material used thereby ensure proper bonding of the matrix material 3.

By providing the fibres with a protective jacket 4, a greater amount of fibres 1 can be packed into the volume of the resulting composite material while ensuring that all fibres 1 are supported by the matrix material 3 on their entire surface.

Fibre-to-fibre contacts are avoided. As a result, the fatigue resistance of the composite material is enhanced.

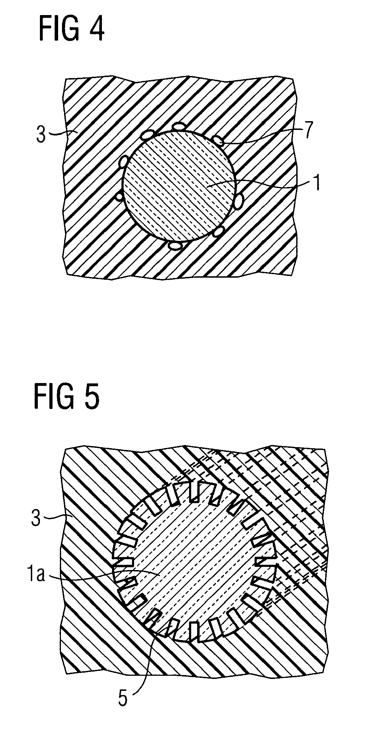

In a further embodiment of the invention, shown in FIG 4, the fibre-reinforced plastic material comprises fibres 1 and matrix material 3. Thereby, particles 7 are adhered to the surface of the fibres 1. The fibres 1 with the particles adhered thereto are embedded in the matrix material 3.

The fibres 1 are cylindrical elongate fibres, preferably, glass fibres. The matrix material 3 is, preferably, a thermoset resin like epoxy, polyester, polyurethane or even a plant based resin.

The particles 7 serve as fibre spacers. They can be of a round, an elongated or other shape. Preferably, the particles have a length or a diameter of up to one tenth of the fibre diameter. The particles 7 can also comprise nano particles or nano fibres having one or more dimensions of the order of 100nm or less.

According to this embodiment of the invention, the particles 7 are able to be adhered to the surface of the fibres 1. They can, for instance, be glued thereon. Preferably, this is done during the aforementioned sizing process of the fibres 1. Thereby, the particles are contained in the sizing solution which is applied to the fibre surface.

Alternatively, the particles 7 are able to be applied to the fibre surfaces 1 in the form of an aerosol.

The particles 7 adhered to the fibre surfaces allow the matrix material 3 for completely surrounding and supporting the fibres 1. Direct fibre-to-fibre contacts are avoided. As a result, the fatigue resistance of the composite material is enhanced.

In yet a further embodiment of the invention, shown in FIG 5, the fibre-reinforced plastic material comprises fibres 1a and matrix material 3. The fibres 1a are designed with logitudinal grooves 5 and are embedded in the matrix material 3.

The fibres 1a are cylindrical elongate fibres, preferably, glass fibres. The matrix material 3 is, preferably, a thermoset resin like epoxy, polyester, polyurethane or even a plant based resin.

According to this embodiment of the invention, longitudinal grooves 5 are arranged on the surfaces of the fibres 1a.

Preferably, the grooves are arranged all around the fibres 1a. They can have, for example, a depth and a width of at most one tenth of the fibre diameter.

As an advantage, the grooved fibres 1a allow for adhesion of the matrix material 3 on an extended surface. The contact surfaces of fibre-to-fibre contacts are reduced and the fatigue resistance of the composite material is enhanced.

In another embodiment of the invention, a resin material with enhanced penetration and/or capillary characteristics is used to ensure that the resin material flows easily around all fibres and covers them completely.

The aforementioned embodiments, shown in FIG 1 to 5 can, of course, be combined.

As an example of such a combination, the fibres 1 can comprise protective jackets 4 and in addition, second fibres 2 can be introduced between the first fibres 1. Moreover, all fibres, the first and the second fibres, can have protective jackets to avoid fibre-to-fibre contacts.

Another example of a combination of the embodiments is a fibre-reinforced plastic material with a mix of fibres 1,2 with different diameters wherein spacer particles 7 are adhered to the fibre surface.

As further examples of possible combinations of the embodiments, grooved fibres 1a can be used in combination with a matrix material 3 comprising particles 6. The grooved fibres 1a could also have different diameters.

As it becomes apparent from these examples, further combinations of the aforementiond embodiments are possible.

## Claims

1. Fibre-reinforced plastic material comprising matrix material (3); and
fibres (1a) embedded in the matrix material (3)
- wherein the surface of the fibres (1a) comprise at least one groove (5) to extend the bonding surface of the fibres (1a) for an enhanced adhesion of the matrix material (3).

2. Plastic material according to claim 1
- wherein the groove (5) is arranged in the direction of the longitudinal axis of the fibres (1a).

3. Plastic material according to claim 1
- wherein the groove (5) is arranged perpendicular to the direction of the longitudinal axis of the fibres (1a) all around the fibres (1a).

4. Plastic material according to claim 1
- wherein the depth and the width of the groove (5) is at most one tenth of the diameter of the fibres (1a).

5. Plastic material according to claim 1
- wherein the matrix material (3) comprises epoxy, polyester, polyurethane or a plant based resin.

6. Plastic material according to claim 1
- wherein the fibre material (1a) comprises glass, carbon, aramid or basalt.

7. Wind turbine blade made of a fibre-reinforced plastic material according to one of the preceding claims.
